# EUROPÄISCHE PATENTSCHRIFT

(11) **EP 4 021 700 B1**
(45) Veröffentlichungstag und Bekanntmachung des Hinweises auf die Patenterteilung: **06.11.2024**
(21) Anmeldenummer: 20785945.5
(22) Anmeldetag: 30.09.2020
(51) Int. Cl.: B29B 9/06, B29B 7/58, B29B 7/82, B29C 48/00, B29C 48/05, B29C 48/30, B29C 48/345, B22F 5/10, B29C 48/04, B33Y 80/00

(54) **LOCHPLATTE ZUM HEISSABSCHLAG-GRANULIEREN VON SCHMELZEN, SOWIE DARAUF BEZOGENES HERSTELLUNGSVERFAHREN**
DIE PLATE FOR HOT DIE FACE GRANULATION OF MELTS, AND RELATED METHOD OF MANUFACTURE
PLAQUE PORTE-FILIÈRE POUR LA GRANULATION À CHAUD PAR FACE DE FILIÈRE DE MATIÈRES FONDUES, ET PROCÉDÉ DE FABRICATION ASSOCIÉ

(30) Priorität: 15.10.2019 DE 102019127666
(43) Veröffentlichungstag der Anmeldung: 06.07.2022
(73) Patentinhaber: Maag Germany GmbH, 63762 Großostheim (DE)
(72) Erfinder: FISCHER, Florian, 85560 Ebersberg (DE); ELOO, Michael, 46509 Xanten (DE); DAHLHEIMER, Stefan, 63801 Kleinostheim (DE)
(74) Vertreter: Thoma, Michael
(86) Internationale Anmeldenummer: PCT/EP2020/077299
(87) Internationale Veröffentlichungsnummer: WO 2021/073869

(56) Entgegenhaltungen:
- DE-A1- 102014 116 361
- DE-A1- 102015 225 344
- DE-A1- 102016 124 387
- DE-A1- 3 532 937
- JP-A- 2017 024 012
- US-A1- 2017 252 851
- US-B1- 6 220 847

## Beschreibung

Die vorliegende Erfindung betrifft allgemein das Granulieren von schmelzeförmigen Stoffen wie beispielsweise Polymerschmelzen, die durch die Schmelzekanäle einer Lochplatte hindurchgedrückt und auf der Austrittsseite heiss abgeschlagen und zu Granulat zerteilt werden. Die Erfindung betrifft dabei einerseits die Lochplatte mit einem Lochplattenkorpus, der Schmelzekanäle aufweist, die durch den Lochplattenkorpus hindurchführen und ringförmig verteilt angeordnet auf einer Austrittsfläche münden, an der austretende Schmelzestränge von einem rotierenden Messer heiss abgeschlagen werden, einen Granulierkopf mit einer solchen Lochplatte sowie einen Granulierer, insbesondere Unterwasser-, Wasserring- oder Luft-Granulierer mit einem solchen Heißabschlag-Granulierkopf. Andererseits betrifft die Erfindung ein Verfahren zur Herstellung einer solchen Lochplatte.

Derartige Lochplatten können mit einem Messerkopf des Granulierers zusammenarbeiten, dessen rotierende Messer auf der Austrittsfläche der Lochplatte entlangschaben, um die Schmelzestränge, die aus den Schmelzekanälen austreten, heiss abzuschlagen, wobei die Austrittsfläche um die Mündungen der Schmelzekanäle herum eine Eingriffs- oder Gegenfläche für die rotierenden Messer bildet, die oft eben, aber auch ballig bzw. konkav oder gekrümmt ausgebildet sein kann, um eine entlangstreichende Messerkante je nach Messerkonturierung flächig bzw. linienförmig abzustützen.

Im Falle von Unterwasser-Granulierern rotieren die genannten Messer in einem Wasserbad, so dass die abgeschlagenen Pellets nicht zusammenkleben und soweit erstarren bzw. abkühlen, dass sie besser handzuhaben sind.

Im Falle von Wasserring-Granulierern sind die Messer und die Lochplattenstirnseite nicht in einem Wasserbad positioniert, sondern umfangsseitig von einem ringförmigen, vorbeiströmenden Wasserstrom umschlossen, der die abgeschlagenen Pellets mitreißt und abtransportiert und dabei abkühlt, um eine Verfestigung einzuleiten. Die umlaufenden Messer schneiden die aus der Lochplatte stirnseitig austretenden Schmelzestränge an sich trocken ab und schleudern die noch heißen, schmelzeförmigen Granulate in den umlaufenden Wasserring. Der "Wasserring" muß dabei nicht zwangsweise aus Wasser bestehen, was gleichwohl der Fall sein kann, sondern kann auch ein anderes Transportund/oder Kühlmedium bspw. in Form eines flüssigen Stoffgemischs umfassen bzw. zumindest teilweise auch in Form eines Tröpfchen- und/oder Spraynebelstroms oder einem Gemisch hiervon vorliegen. Auch bei den zuvor genannten Unterwassergranulieren muß das Wasserbad bzw. der an der Lochplatte und den Messern vorbeiführende Wasserstrom nicht zwangsweise aus Wasser bestehen, was gleichwohl der Fall sein kann, sondern es kann in analoger Weise auch ein anderes Transport- und/oder Kühlmedium Verwendung finden.

Bei Luft- bzw. Kühlluft-Granulierern erfolgt der Heißabschlag trocken, wobei hier ebenfalls ein rotierendes Messer an einer Lochplatte entlangstreichen kann, um die aus den Kanalmündungen austretenden Schmelzestränge abzuschlagen. Das heiß abgeschlagene Granulat wird durch einen Luftstrom weiter befördert und gekühlt, was durch die geringere Wärmeleitfähigkeit von Luft gegenüber Wasser länger dauert.

In den genannten Fällen, insbesondere bei der Unterwassergranulierung und der Wasserringgranulierung, aber in bestimmtem Maße auch bei der genannten Luftgranulierung unterliegen die Lochplatten nicht nur der mechanischen Beanspruchung durch die vorbeistreichenden Messer, sondern auch komplexen thermischen Anforderungen, die aus dem Heißabschlag resultieren. Einerseits sollen die Schmelze bzw. die Schmelzestränge in einem bestimmten Temperaturfenster durch die Lochplatte strömen und daraus austreten, um ein Einfrieren der Schmelzekanäle zu verhindern und gleichzeitig Temperaturgrenzen des zu granulierenden Materials einzuhalten. Dies bringt es mit sich, dass die Lochplatte eine bestimmte, oft relativ hohe Temperatur haben soll. Andererseits ist die Umgebung der Lochplatte in Form des Wasserbads bzw. des Wasserrings recht kalt, so dass sehr hohe Temperaturgradienten an den Lochplatten auftreten.

Um ein zu starkes Abkühlen der Lochplatten von ihrer Austrittsseite her zu verhindern, insbesondere wenn sie in Unterwasser-Granulierern eingesetzt und von einem Wasserbad umspült sind und mit dem kalten Prozesswasser in Berührung stehen, werden solche Lochplatten bisweilen thermisch isoliert ausgebildet bzw. mit einer Isolierung versehen. Eine solche Isolierung kann beispielsweise eine Hohlkammer im Inneren des Lochplattenkorpus umfassen, die möglichst großflächig ausgebildet werden kann, um einen direkten Wärmeübergang von der heißen Eintrittsseite zur kalten Austrittsseite der Lochplatte über das thermisch gut leitende, üblicherweise metallische Material des Lochplattenkorpus zu vermeiden.

Alternativ oder zusätzlich zu einer solchen mit Luft oder Gas befüllten oder auch vakuumierten Hohlkammer ist es auch bekannt, die Lochplatte von innen her zu beheizen, wobei ein Heizfluid durch die genannte Hohlkammer bzw. separate Heizkanäle hindurchzirkuliert wird.

Auch wenn bei Wasserring-Granulierern die Abkühlung durch den vorbeiströmenden Wasserring und das Einfrieren der Schmelzekanäle bzw. - kanalmündungen weniger problematisch ist, muß auch bei Wasserring-Granulierern eine exakte Temperaturführung für das zu granulierende Gut eingehalten werden. Dies gilt grundsätzlich in ähnlicher Weise auch für Luftgranulierer. Wasserring-Granulierer und auch Luftgranulierer werden nicht nur für das Granulieren von thermoplastischen Kunststoffen, sondern auch gerne für das Granulieren von pharmazeutischen Stoffen oder von Lebensmitteln eingesetzt, die üblicherweise empfindlich auf falsche Temperaturen beim Granulieren reagieren und ein sehr enges Temperaturfenster benötigen, so dass die Lochplatte feinfühlig zu beheizen und/oder zu kühlen bzw. zu isolieren ist.

Lochplatten zum Unterwassergranulieren sind beispielsweise aus den Schriften DE 10 2014 116 361 A1, DE 35 32 937 A1, US 2006/0165834 A1, US 2007/0254059 A1, WO 2010/019667 A1 oder DE 40 36 196 A1 bekannt.

Dabei schlägt die letztgenannte Schrift WO 2010/019667 A1 vor, die Schmelzekanäle und den Verschleißring, auf dem die Schmelzekanäle münden, durch Einsätze aus schlechter leitendem Material gegenüber dem restlichen Lochplattenkorpus zu isolieren. Die DE 40 36 196 A1 schlägt vor, zwischen den Schmelzekanälen in der Lochplatte Heizmittelkanäle vorzusehen und zwischen diesen Heizmittelkanälen und der vom Wasserbad gekühlten Plattenstirnseite, die die Lochplatten-Austrittsfläche bildet, auf der die Schmelzekanäle münden, zusätzliche Isolierkanäle im Lochplattenkorpus auszubilden, die von einem Inertgas als Isolationsmedium durchströmt werden.

Lochplatten zum Wasserring-Granulieren sind bspw. aus den Schriften AT 508 199 B1 oder DE 10 2012 012 070 A1 bekannt.

Lochplatten zum Luft- bzw. Kühlluft-Granulieren sind beispielsweise aus der Schrift EP 26 99 235 B1 bekannt.

Durch die diversen Isolations- und Temperiermaßnahmen besitzen solche Lochplatten eine zunehmend komplexere Geometrie, die einen entsprechenden Fertigungsaufwand mit sich bringt. Speziell die Hohlkammern in den Lochplatten sind schwierig zu fertigen.

Hinzu kommt, dass derartige Lochplatten eine ausreichende Stabilität brauchen, um den äußeren Kräften und thermischen Spannungen standzuhalten. Neben der Beanspruchung durch die rotierenden Messer muss die Lochplatte auch dem Wasserdruck standhalten, der auf der Austrittsseite vom Prozesswasser in der Unterwasserbox ausgeübt wird. Zudem kommt es durch den starken Temperaturgradienten in der Lochplatte zu thermischen Spannungen. Diesbezüglich ist zu sehen, dass zu Isolationszwecken bzw. zum Temperieren die Lochplatte großräumig ausgehöhlt wird und die die Temperier-Hohlkammer begrenzenden Wandungen auf der Eintritts- und Austrittsseite der Lochplatte oft nur noch sehr dünn sind, so dass auch schon der begrenzte Wasserdruck zu Verformungen führen kann. Gleichzeitig muss die Lochplatte dauerhaft dicht und frei von Rissen bleiben, um den Eintritt von Prozesswasser zu verhindern.

Der vorliegenden Erfindung liegt daher die Aufgabe zugrunde, eine verbesserte Lochplatte, einen verbesserten Granulierkopf mit einer solchen Lochplatte, einen verbesserten Granulierer sowie ein verbessertes Verfahren zur Herstellung einer solchen Lochplatte zu schaffen, die Nachteile des Standes der Technik vermeiden und Letzteren in vorteilhafter Weise weiterbilden. Insbesondere soll eine verbesserte Anpassung der Lochplattenstruktur an die thermischen Erfordernisse und Einsatzbedingungen erreicht werden, ohne Einbußen bei der mechanischen Standfestigkeit zu erleiden.

Erfindungsgemäß wird die genannte Aufgabe durch eine Lochplatte gemäß Anspruch 1, einen Granulierkopf mit einer solchen Lochplatte gemäß Anspruch 9, einen Granulierer gemäß Anspruch 11 sowie ein Verfahren zur Herstellung einer Lochplatte gemäß Anspruch 14 gelöst. Bevorzugte Ausgestaltungen der Erfindung sind Gegenstand der abhängigen Ansprüche.

Es wird also vorgeschlagen, den Lochplattenkorpus nicht aus diversen Einsätzen und Deckelteilen zusammenzusetzen, sondern durch additiven Materialauftrag schichtweise in der benötigten Konturierung einschließlich der zumindest einen Hohlkammer aufzubauen und hierdurch die Geometriebeschränkungen herkömmlicher Lochplatten zu eliminieren, wie sie durch Zerspanen und Löten von Plattenteilen gegeben sind. Erfindungsgemäß wird der Lochplattenkorpus einschließlich seiner zumindest einen Temperier- und/oder Isolier-Hohlkammer und den die Schmelzekanäle umgebenden Korpusabschnitten durch additiven Materialauftrag als integral einstückiger Schichtbaukörper ausgebildet, dessen Materialschichten einzeln Schicht für Schicht verfestigt sind. Durch den additiven Materialauftrag und die hierdurch schichtweise entstehende Kontur lassen sich einerseits auch im Bereich der für die Temperierung bzw. thermischen Isolierung ausgebildeten Hohlkammer komplexe, harmonische und organisch gewachsene Wandungsverläufe erzielen, die der Lochplatte Stabilität geben und eine Rissbildung vermeiden sowie strömungsgünstig für ein die Hohlkammer durchströmendes Temperier- oder Isoliermedium sind. Gleichzeitig kann durch den integral einstückigen Schichtbaukörper trotz Hohlkammer und Schmelzekanälen eine dichte Ausbildung erzielt werden.

Insbesondere kann der schichtweise aufgebaute Lochplattenkorpus aus einem metallischen Werkstoff geformt sein. Unabhängig hiervon kann der schichtweise aufgebaute Lochplattenkorpus im 3D-Druckverfahren mittels eines 3D-Druckkopfs, im Stereolithografieverfahren oder einem anderen additiven Aufbauverfahren aus Schichten aufgebaut sein.

Insbesondere können mittels eines Energiestrahls Werkstoffschichten nacheinander schichtweise verflüssigt und/oder verfestigt werden. Beispielsweise können ein oder mehrere Werkstoffe pulverförmig und/oder pastös und/oder flüssig schichtweise aufgetragen und durch einen Laserstrahl oder Elektronenstrahl oder Plasmastrahl schichtweise aufgeschmolzen und/oder verfestigt und/oder ausgehärtet und/oder zur chemischen Reaktion gebracht werden, um jeweils eine ausgehärtete Schicht zu bilden. Durch die schichtweise Ausbildung kann der Lochplattenkorpus auch im Bereich des Temperier- und/oder Isolier-Hohlraums oder anderen schwierig zu formenden Abschnitten wie beispielsweise den Schmelzekanalwandungen oder Heizfluidanschlüssen oder -kanälen mit wechselnden Krümmungen und/oder eckigen oder gerundeten Übergängen zwischen verschiedenen Konturabschnitten auch bei kleinteiligen Oberflächenkonturen exakt formangepasst werden.

Die Schmelzekanäle können in Kanalsäulen ausgebildet werden, die zumindest teilweise freistehend in der Hohlkammer des Lochplattenkorpus angeordnet und mit Wandungen des Lochplattenkorpus, die die genannte Hohlkammer auf gegenüberliegenden Seiten begrenzen, integral einstückig, materialhomogen ausgebildet werden. Die genannten Kanalsäulen, durch die hindurch sich die Schmelzekanäle erstrecken, können dabei organisch aus den ein- und austrittsseitigen Korpuswandungen, die den dazwischen liegenden Hohlraum begrenzen, herauswachsen, wodurch sich nicht nur eine stabile Struktur ergibt, sondern auch Dichtigkeitsprobleme an den Austrittsstellen der Schmelzekanäle vermieden werden können.

Die genannten Kanalsäulen können zusammen mit anderen Konturabschnitten des Lochplattenkorpus in parallelen oder nacheinander erfolgenden Arbeitsschritten in der genannten Weise schichtweise aufgebaut sein, insbesondere im 3D-Druckverfahren gedruckt sein. Die genannten Kanalsäulen können dabei zunächst als Vollmaterialkorpus ausgebildet werden, in dem dann in einem folgenden Bearbeitungsschritt der jeweilige Schmelzekanal spanend eingearbeitet wird. Alternativ können die Kanalsäulen auch bereits mit einem Sackloch oder einem Durchgangsloch beim schichtweisen Aufbau versehen werden, welches Sack- oder Durchgangsloch dann in einem folgenden Bearbeitungsschritt spanend nachbearbeitet, beispielsweise aufgebohrt und/oder poliert und/oder geschliffen werden kann. Vorteilhafterweise besitzen die Schmelzekanäle eine möglichst glatte Wandungsoberfläche mit einer niedrigen Rautiefe, um den Schmelzefluss möglichst wenig zu beeinträchtigen. Während die Außenwandungen der genannten Kanalsäulen unbearbeitet bleiben bzw. eine Schichtbaukörperoberfläche besitzen können, ist die Schmelzekanalwandung vorteilhafterweise spanend bearbeitet, insbesondere gebohrt und/oder gefräst und/oder poliert und/oder geschliffen und/oder gehont.

Um Spannungsspitzen im Wurzelbereich der Kanalsäulen zu reduzieren oder gar eine Rissbildung im Übergangsbereich zu den ein- und austrittsseitigen Korpuswandungen hin zu verhindern, können die genannten Kanalsäulen sich vorzugsweise harmonisch verbreiternde Endabschnitte aufweisen und/oder im Querschnitt betrachtet gerundete Außenumfangskonturen im Übergangsbereich zu den angrenzenden Lochplattenwandungen aufweisen. Insbesondere können die Kanalsäulen an ihren Außenwandungen in beide axiale Richtungen, die parallel zum Schmelzefluss sind, hinterschnitten ausgebildet werden. Durch den schichtweisen Aufbau ergibt sich dennoch nicht die bei solchen hinterschnittenen Konturen übliche Problematik der Entformung.

Um auch bei einer großflächigen Ausdehnung der Hohlkammer eine ausreichende Stabilität der die Hohlkammer begrenzenden Stirnwandungen der Lochplatte zu erzielen, können in Weiterbildung der Erfindung im Inneren der Hohlkammer Stützwände oder -pfeiler vorgesehen sein, die die einlassseitige Korpuswandung mit der auslassseitigen Korpuswandung verbinden und gegeneinander abstützen.

In Weiterbildung der Erfindung sind die genannten Stützwände und/oder -pfeiler ebenfalls schichtweise aufgebaut bzw. als Schichtbaukorpus ausgebildet und/oder integral einstückig an die Korpuswandungen angeformt, die die genannte Hohlkammer auf gegenüberliegenden Seiten, insbesondere den Einlass- und Auslassseiten der Lochplatte, begrenzen. Durch das integral einstückige Anformen der Stützwände und/oder -pfeiler an die Stirnwände der Lochplatte kann eine nochmals deutlich erhöhte Stabilität erzielt werden. Gleichzeitig kann durch den additiven, schichtweisen Aufbau eine sehr schlanke Konturierung der Stützwände bzw. -pfeiler erreicht werden, die einen ungewollten Wärmeübergang vermeidet.

Vorteilhafterweise kann eine Vielzahl an Stützwänden und/oder -pfeilern über den Hohlraum verteilt vorgesehen sein, um eine gleichmäßige Abstützung zu erzielen und/oder auch eine Verteilung des Temperierfluids zu erreichen, wenn die Hohlkammer von einem Temperierfluid durchströmt wird. Vorteilhafterweise können beispielsweise mehr als zehn oder mehr als 20 oder mehr als 30 Stützwände und/oder -pfeiler in der genannten Hohlkammer vorgesehen sein.

Die genannten Stützwände und/oder -pfeiler können eine Wand- oder Pfeilerstärke bzw. -dicke oder -durchmesser besitzen, die bzw. der weniger als 40% oder weniger als 30% oder weniger als 20% der Höhe der jeweiligen Stützwand bzw. des jeweiligen Stützpfeilers betragen kann.

In Weiterbildung der Erfindung können die Stützwände und/oder -pfeiler eine Stützstruktur bilden, die etwa gleichmäßig über die Hohlkammer verteilt ausgebildet ist und/oder ein gleichmäßiges Stützmuster bildet.

In Weiterbildung der Erfindung können die Stützwände und/oder die Stützpfeiler ein wellenförmiges Muster bilden und/oder einen wellenförmigen Verlauf besitzen, wenn eine Querschnittsebene senkrecht zur Schmelzehauptflussrichtung betrachtet wird und/oder bei weggeschnittener Stirnwandung der Lochplatte in einer Blickrichtung näherungsweise parallel zur Schmelzedurchflussrichtung auf die freigelegte Hohlkammer geschaut wird.

Die Stützwände und/oder -pfeiler können sich entlang paralleler Wellenlinien von einer Seite der Lochplatte zu einer gegenüberliegenden Seite der Lochplatte erstrecken, insbesondere von der Seite, an der die Lochplatte einen Temperiermitteleinlass besitzt, zu einer gegenüberliegenden Lochplattenseite, an der ein Temperiermittelauslass vorgesehen ist. Dementsprechend kann das in die Hohlkammer eingeleitete Temperierfluid trotz der Vielzahl an Stützwänden und/oder -pfeilern gleichmäßig durch die Lochplatte hindurchströmen. Bei einem wellenförmigen Verlauf der Stützwände kann die Temperierwirkung des durchströmenden Fluids nochmals erhöht werden.

In Weiterbildung der Erfindung können die genannten Stützwände Durchbrüche besitzen, deren Randkontur zumindest abschnittsweise gerundet und/oder bogenförmig ausgebildet sein kann. Insbesondere können torbogenförmige Durchbrüche in einer Stützwand nebeneinander gereiht vorgesehen sein, so dass eine jeweilige Stützwand eine Reihe von fenster- oder torbogenförmigen Durchbrüchen besitzt. Durch die gerundete Randkontur können Spannungsspitzen vermieden und eine gleichmäßige Einleitung von Kräften erzielt werden.

Die genannte Hohlkammer kann sich in vorteilhafter Weiterbildung der Erfindung zumindest in einem von dem ringförmigen Muster der Schmelzekanäle eingeschlossenen Innenbereich der Lochplatte und/oder zumindest in einem das ringförmige Muster der Schmelzekanäle umgebenden Außenbereich der Lochplatte erstrecken. Vorteilhafterweise erstreckt sich die Hohlkammer sowohl außenseitig als auch innenseitig der genannten Schmelzekanäle, so dass zum einen beide angrenzenden Nachbarbereiche des ringförmigen Schmelzekanalmusters thermisch isoliert sind und/oder temperiert werden können. Insbesondere erstreckt sich die Hohlkammer von innen nach außen über die Schmelzekanäle bzw. Kanalsäulen, in denen die Schmelzekanäle ausgebildet sind, hinweg, so dass die genannten Schmelzekanäle freistehend in der Hohlkammer angeordnet sind.

Die Hohlkammer kann sich über zumindest 30% oder auch mehr als 50% oder mehr als 60% oder mehr als 70% der Querschnittsfläche der Lochplatte erstrecken, um eine möglichst gute Isolierung und/oder Temperierung zu ermöglichen. Hiervon unabhängig kann die Hohlkammer in axialer Richtung, also in Richtung der Messer-Rotationsache bzw. in Schmelzestromrichtung, eine Höhe besitzen, die zumindest 25% oder auch mehr als 33% oder auch mehr als 50% der Höhe bzw. der Dicke der Lochplatte beträgt.

Um das beim additiven Fertigen der Lochplatte nicht verfestigte Rohmaterialpulver bzw. Rohmaterial aus der sich bildenden Hohlkammer wieder herauszubekommen, kann die Lochplatte zumindest ein Entleerungsloch, vorzugsweise mehrere verteilt angeordnete Entleerungslöcher aufweisen, die aus der genannten Hohlkammer herausführen und auf einer Außenseite der Lochplatte münden, vorzugsweise auf einer der gegenüberliegenden Stirnseiten der Lochplatte. Vorteilhafterweise können die genannten Entleerungslöcher auf der Einlassseite der Lochplatte münden, mit der die Lochplatte auf den Anschlusskorpus des Granulierkopfs gesetzt wird, so dass die Entleerungslöcher im montierten Zustand des Granulierkopfs verdeckt sind bzw. verschlossen sind.

Um einen vorzeitigen Verschleiß der Lochplatte zu vermeiden, kann auf der Austrittsseite der Lochplatte ein verschleißfester Hartmaterialring aufgesetzt sein, auf dessen Außenseite die Messer des Messerkopfs entlanglaufen, um die austretenden Schmelzestränge abzuschlagen bzw. abzuschneiden. Die genannte Außenseite des verschleißfesten Hartmaterialrings bildet eine mit den Messern zusammenwirkende Messergleitfläche, auf der die rotierenden Messer entlanggleiten können und gegen die die Messer angedrückt werden können.

Der genannte verschleißfeste Hartmaterialring kann separat vom Schichtbaukörper der Lochplatte gefertigt sein und an dem als Schichtbaukörper ausgebildeten Lochplattenkorpus in verschiedener Weise befestigt werden, beispielsweise festgelötet werden oder aufgelötet werden.

In alternativer Weiterbildung der Erfindung kann der schichtweise aufgebaute Lochplattenkorpus aber auch stoffschlüssig mit dem Hartmaterialring verbunden und/oder beim schichtweisen Aufbau auf dem besagten Hartmaterialring aufgebaut werden. Der Hartmaterialring kann als Basiskorpus dienen, auf den der Lochplattenkorpus dann Schicht für Schicht aufgebaut wird, wobei sich die unterste bzw. unmittelbar an den Hartmaterialring angrenzende Schicht des Schichtbaukorpus mit dem Hartmaterialring materialschlüssig und/oder durch Mikroformschluss und/oder chemische Bindung verbindet. Wird die direkt auf dem Hartmaterialring befindliche Pulverschicht bzw. Rohmaterialschicht aufgeschmolzen und verfestigt, verzahnt sich das verfestigende Schichtmaterial in den Mikroporen des Hartmaterials und deckt daran fest. Hierdurch kann nicht nur ein späterer Verbindungsschritt wie beispielsweise das genannte Festlöten eingespart werden, sondern auch eine dichte Verbindung des Hartmaterialrings mit dem angrenzenden Lochplattenkorpus erzielt werden.

Der Hartmaterialring kann einschichtig ausgebildet sein bzw. nicht im 3D-Druck aufgebaut sein.

Andererseits kann der als Schichtbaukörper ausgebildete Lochplattenkorpus aber auch von der gegenüberliegenden Seite, d.h. der Einlasseite her aufgebaut werden, wobei in vorteilhafter Weiterbildung der Erfindung der Schichtbaukorpus unmittelbar auf dem daran angrenzenden Anschlussstück des Granulierkopfes aufgebaut werden kann. Das besagte Anschlussstück kann eine Verteilkammer und/oder Verteilerkanäle aufweisen, um das von einer Schmelzequelle her, beispielsweise einer Extrudiereinrichtung her kommende, geschmolzene Material auf die Schmelzekanäle der Lochplatte zu verteilen.

Der im additiven Verfahren, schichtweise aufgebaute Lochplattenkorpus kann dabei in der genannten Weise materialschlüssig und/oder durch Mikroformschluss mit dem genannten Anschlusskörper des Granulierkopfs verbunden werden, beispielsweise indem die auf dem Anschlussstück aufliegende Pulverschicht aufgeschmolzen und verfestigt wird, so dass sich in der genannten Weise ein Materialschluss und/oder Mikroformschluss und/oder eine chemische Bindung ergibt.

Alternativ zu einem solchen Anformen des Lochplattenkorpus beim additiven Aufbauen des Lochplattenkorpus kann Letzterer aber auch in anderer Weise mit dem Granulierkopf verbunden werden, beispielsweise daran festgeschraubt und/oder festgelötet und/oder in anderer Weise befestigt werden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, teilweise geschnittene Darstellung des Granulierkopfs und des Messerkopfs eines Heissabschlag-, bspw. Unterwasser-Granulierers, die die auf den Anschlusskörper des Granulierkopfs aufgesetzte, additiv gefertigte Lochplatte und die darüber streichenden Messer des Messerkopfs zeigt,
- Fig. 2:: eine perspektivische Darstellung des Heissabschlag-Granulierkopfs aus Fig. 1, die die Lochplatte und deren Hartmaterialring, auf den die Schmelzekanäle münden, zeigt,
- Fig. 3:: eine Schnittansicht durch die Lochplatte aus den vorhergehenden Figuren, die die Hohlkammer im Inneren der Lochplatte und die Kanalsäulen zeigt, durch die hindurch sich die Schmelzekanäle erstrecken,
- Fig. 4:: eine ausschnittsweise, perspektivische Schrägansicht der Lochplatte im Schnitt, die die Konturierung der Kanalsäulen verdeutlicht,
- Fig. 5:: eine perspektivische Schnittansicht der Lochplatte, die den Lochplattenkorpus ohne Hartmaterialring und mit noch nicht aufgebohrten Schmelzekanälen zeigt, wobei in der Hohlkammer der Lochplatte die Stützwand- und/oder -pfeilerstruktur nach einer vorteilhaften Ausführung der Erfindung gezeigt ist,
- Fig. 6:: eine perspektivische, geschnittene Schrägansicht der Lochplatte ähnlich Fig. 5, die deren Einlasseite zeigt und die torbogenförmigen Durchbrüche durch die Stützwände verdeutlicht,

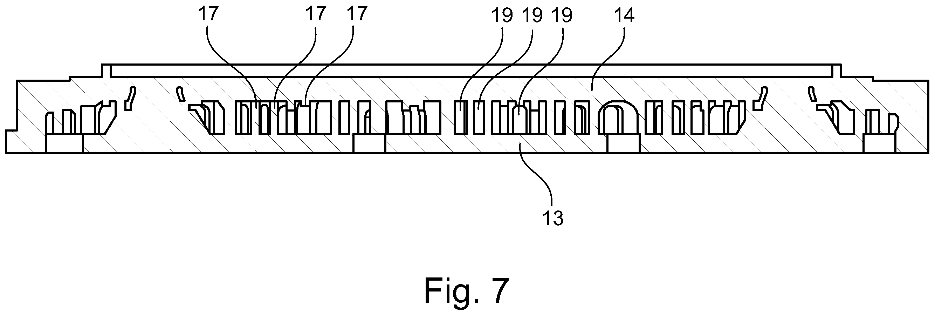

- Fig. 7:: eine Schnittansicht der Lochplatte aus Fig. 5 und 6, und

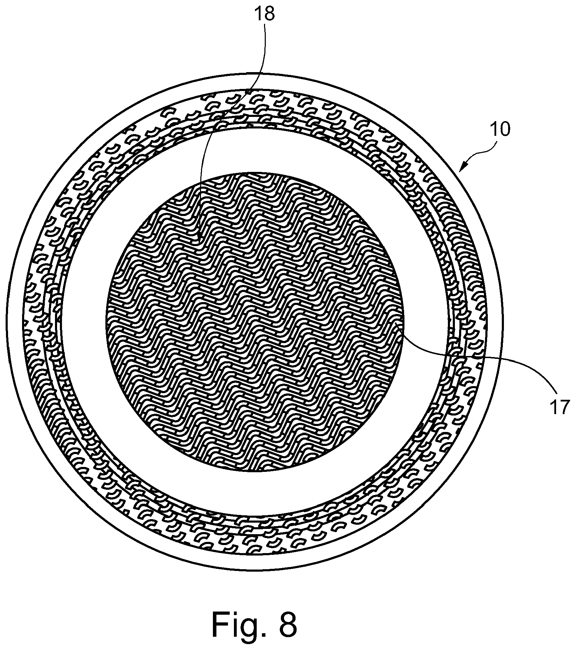

- Fig. 8:: eine Draufsicht auf die Lochplatte aus den vorhergehenden Figuren mit einer freigeschnittenen Draufsicht der Stützwandstruktur in der Hohlkammer der Lochplatte, die deren wellenförmigen Stützwandverlauf zeigt.

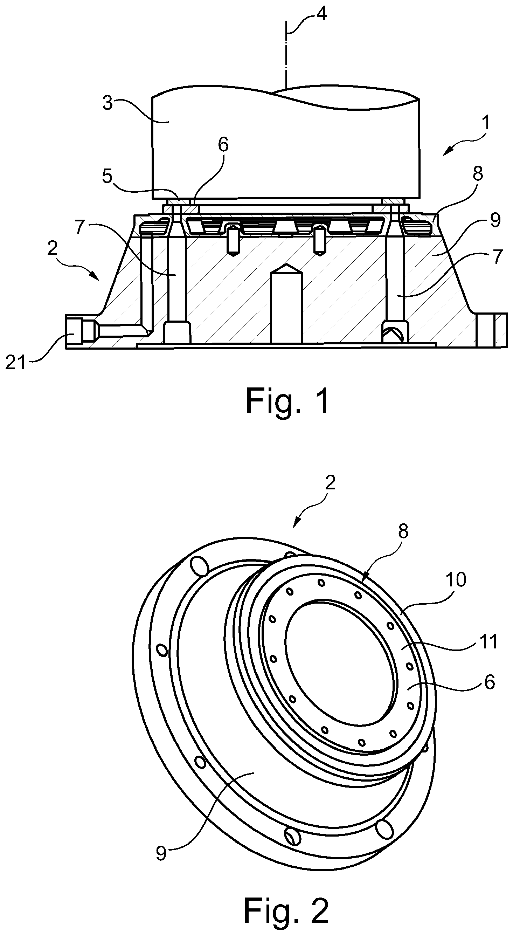

Wie Fig. 1 zeigt, umfasst der Heissabschlag-Granulierer 1 einen Granulierkopf 2, der feststehend angeordnet sein kann, sowie einen Messerkopf 3, der um eine Messerkopfachse 4 rotatorisch antreibbar sein kann und in Richtung der Messerkopfachse 4 an den Granulierkopf 2 angedrückt und/oder zugestellt und/oder vorgespannt sein kann, so dass an der Stirnseite des Messerkopfs 3 vorgesehene Messer 5 auf einer Messergleitfläche 6 des Granulierkopfs 2 entlanggleiten können.

Auf der genannten Messergleitfläche 6 münden in einem ringförmigen Muster verteilt angeordnete Schmelzekanäle 7, die durch den Granulierkopf 2 hindurchführen und von einer Einlassseite des Granulierkopfs 2 her mit Schmelze beschickt werden können, beispielsweise durch einen Extrudierer, der die Schmelze durchknetet und mit Druck zum Granulierkopf 2 fördert. Die Schmelzekanäle 7, die in einem ringförmigen Muster verteilt sind, können einlassseitig mit einer Verteilerkammer kommunizieren, die in der genannten Weise mit druckbeaufschlagter Schmelze versorgt wird.

Die Schmelzekanäle 7 können auf einem gemeinsamen Teilkreis angeordnet sein, ggf. gegenüber einem solchen Teilkreis aber auch nach innen und/oder außen versetzt angeordnet sein, wobei auch zwei oder mehr Reihen von Schmelzekanälen in einem ringförmigen Muster verteilt vorgesehen sein können.

Wie Fig. 1 zeigt, umfasst der Granulierkopf 2 eine Lochplatte 8, die mit ihrer einlasseitigen Stirnseite auf einem Anschlusskörper 9 des Granulierkopfs 2 sitzt. Das genannte ringförmige Muster von Schmelzekanälen 7 erstreckt sich durch den Lochplattenkorpus 10 der Lochplatte 8 hindurch und kommuniziert mit entsprechend angeordneten Schmelzekanälen in dem genannten Anschlusskörper 9.

Auf der Auslassseite des Lochplattenkorpus 10 sitzt ein verschleißfester Hartmaterialring 11, durch den hindurch sich die genannten Schmelzekanäle 7 fortsetzen und auf dessen Außenseite die genannten Schmelzekanäle 7 münden. Die genannte Außenseite des Hartmaterialrings 11 bildet dabei die Messergleitfläche 6, auf der die Messer 5 des Messerkopfes 3 entlanggleiten, um die austretenden Schmelzestränge abzuschneiden bzw. abzuschlagen.

Wie die Figuren zeigen, kann die genannte Messergleitfläche 6 und/oder die Austrittsstirnseite der Lochplatte 8 im Wesentlichen eben ausgebildet sein und/oder sich im Wesentlichen senkrecht oder quer zur Messerkopfachse 4, um die der Messerkopf 3 rotiert, erstrecken. Alternativ kann die Austrittsseite der Lochplatte 8 und/oder zumindest die Messergleitfläche 6, auf der die Schmelzekanäle 7 münden, aber auch gewölbt oder konisch oder schräg angestellt zur Messerkopfachse 4 konturiert sein, beispielsweise in Form einer sphärischen Kugelkalotte oder eines Kegelstumpfs oder einer anderen Ringtoruskontur, wobei in einem solchen Fall die Schmelzekanäle 7 vorteilhafterweise schräg zur Messerkopfachse 4 angestellt und/oder senkrecht auf die schräg angestellte Messergleitfläche 6 münden können.

Unabhängig hiervon kann auch die einlassseitige Stirnseite der Lochplatte 8 eine Wölbung besitzen oder konisch konturiert oder in anderer Weise konkav oder konvex ausgebildet sein. Bei der in der Fig. 1 gezeigten, im Wesentlichen ebenen Ausbildung der Einlassseite kann Letztere auf eine ebenfalls eben ausgebildete Stirnseite des Anschlusskörpers 9 gesetzt sein.

Im Falle von Unterwasser-Granulieren rotieren die genannten Messer 5 in einem Wasserbad in einer Schneidkammer, die den Messerkopf 3 umgibt und an die Lochplattenaustrittsfläche stößt, so dass die austretenden Schmelzestränge im Wasserbad abgeschlagen werden, vgl. WO 2010/019667A1. Im Falle von Wasserring-Granulierern sind die Messer und die Lochplattenstirnseite nicht in einem Wasserbad positioniert, sondern umfangsseitig von einem ringförmigen, vorbeiströmenden Wasserstrom umschlossen, der die abgeschlagenen Pellets mitreißt und abtransportiert und dabei abkühlt, um eine Verfestigung einzuleiten. Die umlaufenden Messer schneiden die aus der Lochplatte stirnseitig austretenden Schmelzestränge an sich trocken ab und schleudern die noch heißen, schmelzeförmigen Granulate in den umlaufenden Wasserring, vgl. AT 508 199 B1.

Wie die Figuren zeigen, besitzt die Lochplatte 8 in ihrem Inneren eine Hohlkammer 12, die zum thermischen Isolieren und/oder Temperieren, bspw. Beheizen oder Kühlen, der Lochplatte 8 konfiguriert ist und zu den einlass- und auslassseitigen Stirnseiten der Lochplatte 8 hin durch zwei Korpuswandungen 13 und 14 begrenzt ist. Zur Außenumfangsseite hin ist die besagte Hohlkammer 12 durch eine Umfangswandung 15 abgeschlossen, die mit den beiden stirnseitigen Korpuswandungen 13 und 14 umlaufend verbunden, insbesondere materialhomogen einstückig ausgebildet ist. Insbesondere kann die Hohlkammer 12 dazu vorgesehen sein, die Schmelzekanäle 7 zu temperieren, bspw. durch ein die Hohlkammer 12 durchströmendes Heizmedium zu beheizen, und/oder gegenüber der Austritts-Stirnseite der Lochplatte 8 thermisch zu isolieren.

Wie die Figuren zeigen, kann sich die genannte Temperier- und/oder Isolier-Hohlkammer 12 im Wesentlichen über die gesamte Querschnittsfläche der Lochplatte 8 erstrecken, insbesondere den Innenbereich innerhalb des ringförmigen Schmelzekanalmusters ausfüllen und/oder einen das besagte Ringmuster der Schmelzekanäle außenseitig umgebenden Bereich ausfüllen. Insbesondere kann sich die Hohlkammer 12 von innen nach außen über die Schmelzekanäle 7 hinweg erstrecken, so dass die Schmelzekanäle 7 bzw. Kanalsäulen 16, durch die hindurch sich die Schmelzekanäle 7 erstrecken, in der Hohlkammer 12 freistehend angeordnet sind und die Hohlkammer 12 durchdringen.

Der genannte Lochplattenkorpus 10 einschließlich seiner stirnseitigen Korpuswandungen 13 und 14 und der Umfangswandung 15, die gemeinsam die Hohlkammer 12 begrenzen, und der genannten Kanalsäulen 16 ist als Schichtbaukörper ausgebildet, dessen Schichten schichtweise verfestigt sind. Insbesondere kann der genannte Schichtbaukorpus durch ein 3D-Druckverfahren hergestellt sein, wobei die genannten Korpus- und Umfangswandungen 13, 14, 15 und die Kanalsäulen 16 integral einstückig, materialhomogen miteinander verbunden und jeweils schichtweise aufgebaut sein können.

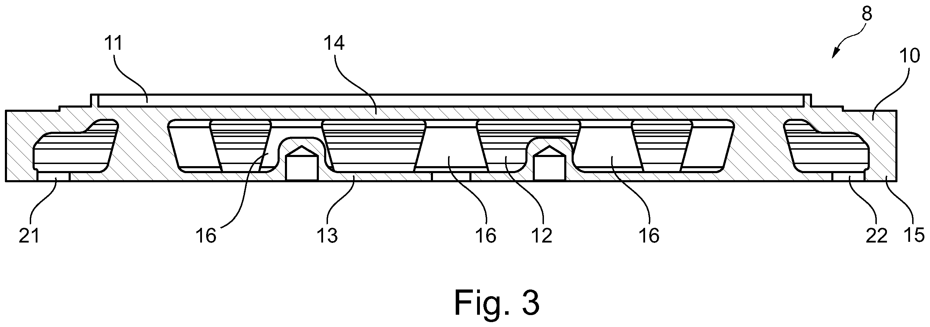

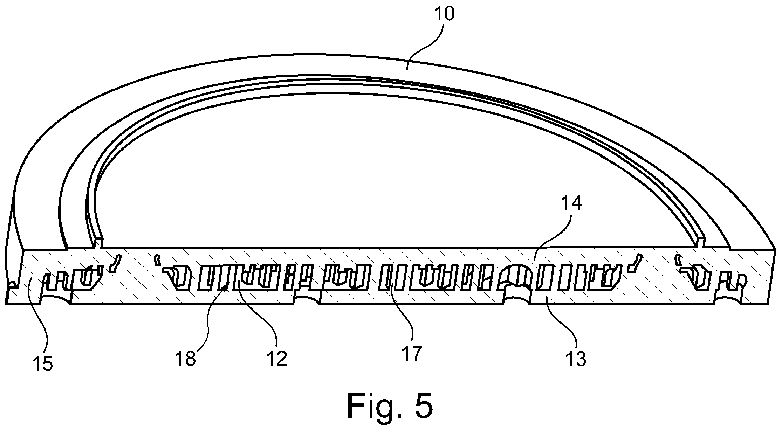

Wie die Figuren 3 bis 6 zeigen, können die Kanalsäulen 16 dabei zunächst als Vollmaterialsäulen Schicht für Schicht aufgebaut werden. Die Schmelzekanäle 7 können nachfolgend spanend in die genannten Kanalsäulen 16 eingearbeitet werden, so dass die Schmelzekanäle 7 nach Art von Durchgangslöchern mit einer ggf. gewünschten Querschnittsänderung sich von der Eintrittsseite der Lochplatte 8 durch diese hindurch auf deren Austrittsseite erstrecken können.

Wie die Figuren zeigen, können die genannten Kanalsäulen 16 vorteilhafterweise insgesamt konisch konturiert sein bzw. eine konisch konturierte Außenseite besitzen, die sich beispielsweise von der Einlassseite zur Auslassseite hin verjüngen kann.

Unabhängig von einer solchen konischen Konturierung können Endabschnitte der Kanalsäulen 16 sich zu den angrenzenden Korpuswandungen 13 und 14 hin verbreitern und/oder einen abgerundeten Konturverlauf besitzen, so dass die Kanalsäulen 16 endseitig eine harmonische Verdickung bzw. Verbreiterung besitzen und einen sanften, gerundeten Übergang zu den Korpuswandungen 14 und 15 hin aufweisen können.

Um die relativ dünnen stirnseitigen Korpuswandungen 13 und 14 abzustützen, können in der genannten Hohlkammer 12 Stützwände 17 und/oder -pfeiler vorgesehen sein, die eine insgesamt wabenartige Stützstruktur 18 bilden können, die die gegenüberliegenden Korpuswandungen 13 und 14 miteinander verbindet bzw. gegeneinander abstützt.

Die genannte Stützstruktur 18 kann integral einstückig mit einer oder beiden gegenüberliegenden Korpuswandungen 13 und 14 verbunden sein, insbesondere durch schichtweisen Aufbau daran materialschlüssig angeformt sein. Unabhängig hiervon kann die genannte Stützstruktur 18 schichtweise als Schichtbaukorpus ausgebildet, insbesondere durch ein 3D-Druckverfahren hergestellt sein. Die genannte Stützstruktur 18 kann vorteilhafterweise parallel zu dem schichtweisen Aufbau der Korpus- und/oder Umfangswandungen 13, 14, 15 bzw. der Kanalsäulen 16 im 3D-Druckprozess hergestellt werden.

Die genannten Stützwände 17 können sich dabei durch eine schlanke Wandstärke auszeichnen, wobei beispielsweise ein Wandstärken-/Wandhöhenverhältnis von 1:5 oder 1:7 oder kleiner vorgesehen werden kann.

Wie Fig. 9 zeigt, können die Stützwände 17 einen wellenlinienförmigen Konturverlauf besitzen, wenn die Wände in einer Blickrichtung parallel zur Messerkopfachse betrachtet werden. Die Wellenform kann dabei einer im Wesentlichen geraden Wellenlaufrichtung folgen, wobei ggf. aber auch eine bogenförmige Wellenlaufrichtung vorgesehen werden kann. Insbesondere können die wellenförmigen Stützwände 17 von einer Lochplattenseite zu einer gegenüberliegenden Lochplattenseite hin verlaufen.

Unabhängig hiervon können die Stützwände 17 einen im Wesentlichen parallelen Verlauf zueinander besitzen und/oder mit einem im Wesentlichen konstanten Spaltmaß zwischen sich ausgebildet sein.

Vorteilhafterweise können mehr als zehn oder mehr als 20 Stützwände 17 vorgesehen sein, insbesondere in einem parallelen Verlauf zueinander angeordnet sein.

Wie die Figuren zeigen, können die genannten Stützwände 17 jeweils mit vorzugsweise fenster- oder türbogenförmigen Durchbrüchen 19 versehen sein, durch die hindurch benachbarte Kanäle zwischen benachbarten Stützwänden miteinander verbunden sind. Wird die Stützstruktur 18 von einem Temperierfluid durchströmt, kann das Temperierfluid durch die Durchbrüche hindurch quer zum Stützwandverlauf strömen und sich gleichmäßig über die Hohlkammer verteilen. Die genannten Durchbrüche 19 in den Stützwänden 17 können vorteilhafterweise zumindest abschnittsweise bogenförmig abgerundet sein, insbesondere zu zumindest einer Korpuswandung 14 hin bogenförmig verrundet sein bzw. eine Abrundung 20 besitzen. Die Stützwände 17 können um die Durchbrüche 19 herum Torbögen bilden.

Wie Fig. 3 zeigt, kann die Lochplatte 8 Einlass- und Auslassanschlüsse 21 und 22 besitzen, über die ein Temperiermittel, beispielsweise Öl oder Wasser oder ein Gemisch zum Temperieren der Lochplatte in diese eingeleitet werden kann bzw. abgelassen oder hindurch zirkuliert werden kann. Das Temperiermittel kann dabei insbesondere durch zumindest einen Teil der Hohlkammer 12 hindurch zirkuliert werden, wobei die Stützwände 17 eine Verteilung des Temperiermittels bewirken können.

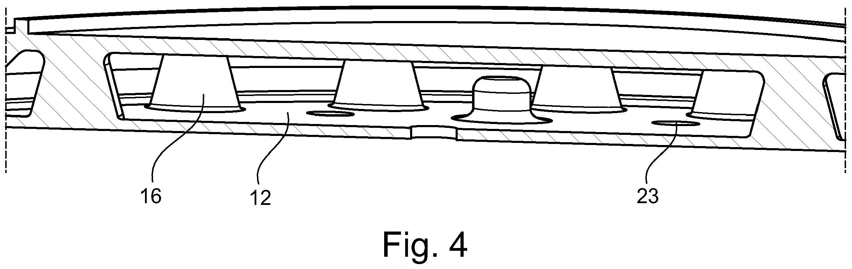

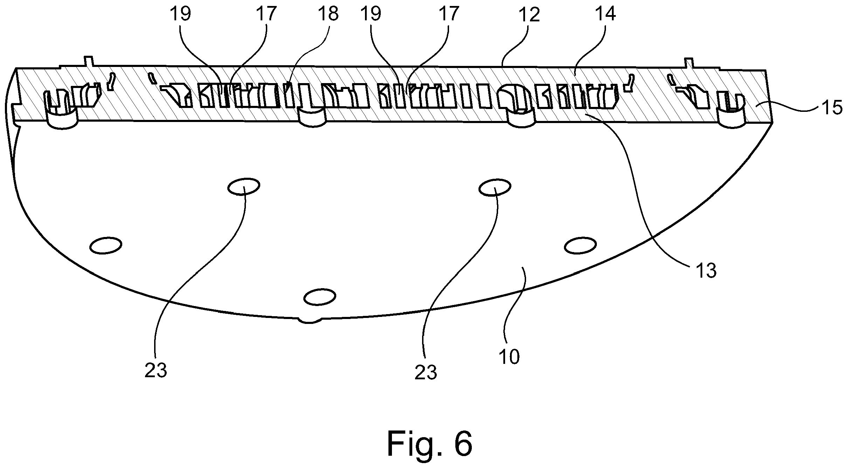

Wie Fig. 4 und 6 zeigen, kann die Lochplatte 8 ferner Entleeröffnungen 23 besitzen, die die Hohlkammer 12 mit der Außenseite verbinden können. Die genannten Entleeröffnungen 22 ermöglichen es, nicht verfestigtes Pulver aus dem 3D-Druckprozess aus der Hohlkammer 12 zu entfernen.

Vorteilhafterweise können die Entleeröffnungen 23 auf die Einlassstirnseite der Lochplatte 8 münden, um beim Ansetzen an den Anschlusskörper 9 des Granulierkopfs 2 verdeckt zu werden.

Der Lochplattenkorpus 10 kann vorteilhafterweise auf dem Anschlusskorpus 9 des Granulierkopfs 2 aufgebaut werden, so dass der Lochplattenkorpus 10 materialschlüssig und/oder durch Mikroformschluss und/oder durch chemische Bindung an dem Anschlusskörper 9 befestigt wird. Insbesondere kann der Anschlusskörper 9 im 3D-Druckprozess als Grundkörper dienen, auf dem das Materialpulver bzw. das Rohmaterial aufgeschüttet bzw. aufgetragen wird, um dann Schicht für Schicht verflüssigt und verfestigt zu werden. Die direkt auf dem Anschlusskörper 9 befindliche Schicht wird dabei fest mit dem Anschlusskörper 9 verbunden.

Umgekehrt kann der Lochplattenkorpus 10 aber auch auf dem verschleißfesten Hartmaterialring 11 in entsprechender Weise befestigt werden, wobei in diesem Fall der genannte Hartmaterialring als Basiskörper im 3D-Druckprozess dienen kann.

Alternativ kann der Lochplattenkorpus 10 aber auch in herkömmlicher Weise mit dem Anschlusskörper 9 und/oder dem Hartmaterialring 11 verbunden werden, beispielsweise durch Löten und/oder Verschrauben und/oder Festpressen.

Der Hartmaterialring 11 kann dabei einstückig sein, ggf. aber auch aus verschiedenen Ringsegmenten zusammengesetzt sein. Ähnliches gilt für den Anschlusskörper 9 und ggf. auch für den schichtweise aufgebauten Lochplattenkorpus 10, der beispielsweise aus zwei Hälften oder aus vier Kuchenstücken oder in anderer Weise segmentweise zusammengesetzt sein kann. Vorteilhafterweise besitzt der Lochplattenkorpus 10 aber keine Schnittstelle bzw. Trennfuge, die durch einen Schmelzekanal hindurchgehen würde.

## Patentansprüche

1. Lochplatte zum Heissabschlag-Granulieren von Schmelzen, mit einem Lochplattenkorpus (10), der Schmelzekanäle (7) aufweist, die durch den Lochplattenkorpus (10) hindurchführen und in einem ringförmigen Muster verteilt auf einer Austrittsfläche (6) münden, an der austretende Schmelzestränge durch ein rotierendes Messer heiss abschlagbar sind, wobei der Lochplattenkorpus (10) zumindest eine Hohlkammer (12) zum Temperieren der Lochplatte und/oder thermischen Isolieren der Schmelzekanäle (7) zumindest teilweise innerhalb des ringförmigen Schmelzkanalmusters aufweist, **dadurch gekennzeichnet, dass** der Lochplattenkorpus (10) als integral einstückiger, additiver Schichtbaukörper ausgebildet ist, dessen Materialschichten additiv aufgebracht und einzeln Schicht für Schicht verfestigt sind.

2. Lochplatte nach dem vorhergehenden Anspruch, wobei die Schmelzekanäle (7) in Kanalsäulen (16) ausgebildet sind, die zumindest teilweise freistehend in der Hohlkammer (12) angeordnet und mit Korpuswandungen (13, 14) des Lochplattenkorpus (10), die die Hohlkammer (12) auf gegenüberliegenden Seiten begrenzen, integral einstückig, materialhomogen verbunden sind, wobei die Kanalsäulen (16) als Schichtbaukörper ausgebildet sind, dessen Materialschichten einzeln Schicht für Schicht verfestigt sind, wobei die Kanalsäulen (16) sich zu gegenüberliegenden Endabschnitten hin verbreitern und/oder an gegenüberliegenden Endabschnitten eine sich verbreiternde Abrundung besitzen, die einen harmonischen Übergang zu der jeweils angrenzenden Korpuswandung (13, 14) bildet, wobei die Außenwandung der Kanalsäulen (16) in beiden Axialrichtungen parallel zur Schmelzeflussrichtung hinterschnitten ausgebildet ist.

3. Lochplatte nach einem der beiden vorhergehenden Ansprüche, wobei in der Hohlkammer (12) eine Stützstruktur (18) ausgebildet ist, die die gegenüberliegenden Korpuswandungen (13, 14), die die Hohlkammer (12) begrenzen, gegeneinander abstützen, wobei die Stützstruktur (18) ein Wellenmuster bildet, das entlang einer Wellenlaufrichtung von einer Lochplattenumfangsseite zur gegenüberliegenden Lochplattenumfangsseite läuft, wobei die Stützstruktur (18) Stützwände (17) und/oder -pfeiler umfasst, die integral einstückig, materialhomogen mit den gegenüberliegenden Korpuswandungen (13, 14) verbunden und/oder daran angeformt sind, wobei die Stützwände (17) und/oder -pfeiler als Schichtbaukorpus aufgebaut und Schicht für Schicht verfestigt sind.

4. Lochplatte nach dem vorhergehenden Anspruch, wobei mehr als 15 oder mehr als 25 Stützwände in der Hohlkammer (12) vorgesehen sind, wobei die Stützwände (17) und/oder -pfeiler entlang zueinander paralleler Linien angeordnet sind.

5. Lochplatte nach einem der beiden vorhergehenden Ansprüche, wobei die Stützwände (17) und/oder -pfeiler mit torbogen- oder fensterförmigen Durchbrüchen (19) versehen sind, wobei die Durchbrüche (19) zumindest zu einer Korpuswandung (13, 14), die die Hohlkammer (12) begrenzt, abgerundet sind, wobei die Stützwände (17) und/oder -pfeiler ein Wandstärken-/Höhenverhältnis von 1:5 oder kleiner besitzen.

6. Lochplatte nach einem der vorhergehenden Ansprüche, wobei der Lochplattenkorpus (10) zumindest eine Entleeröffnung (23) zum Entfernen von nicht verfestigtem Rohmaterial aus der Hohlkammer (12) besitzt, wobei die zumindest eine Entleeröffnung (23) auf der einlassseitigen Stirnseite der Lochplatte (2) mündet.

7. Lochplatte nach einem der vorhergehenden Ansprüche, wobei ein verschleißfester Hartmaterialring (11), der eine Gegenfläche für das rotierende Messer bildet, auf der Austrittsseite des Lochplattenkorpus (10) sitzt und die Schmelzekanäle (7) auf einer Außenseite des Hartmaterialrings (11) münden.

8. Lochplatte nach dem vorhergehenden Anspruch, wobei der Lochplattenkorpus (10) mit dem Hartmaterialring (11) materialschlüssig und/oder durch Mikroformschluss und/oder durch chemische Bindung beim Verfestigen der aufgeschmolzenen, an den Hartmaterialring (11) angrenzenden Materialschicht des Schichtbaukörpers verbunden ist.

9. Heißabschlag-Granulierkopf (2) mit einem Anschlusskörper (9), auf dem eine gemäß den vorhergehenden Ansprüchen ausgebildete Lochplatte (8) befestigt ist.

10. Heißabschlag-Granulierkopf nach dem vorhergehenden Anspruch, wobei die Lochplatte (8) materialschlüssig und/oder durch Mikroformschluss und/oder durch chemische Bindung beim Verfestigen der aufgeschmolzenen, an den Anschlussträger (9) angrenzenden Materialschicht des Schichtbaukörpers verbunden ist.

11. Heißabschlag-Granulierer mit einem Granulierkopf, der gemäß einem der beiden vorhergehenden Ansprüche ausgebildet ist.

12. Heißabschlag-Granulierer nach dem vorhergehenden Anspruch, wobei der Granulierer als Unterwasser- oder Wasserring-Granulierer ausgebildet ist.

13. Heißabschlag-Granulierer nach dem vorhergehenden Anspruch, wobei der Granulierer als Luftgranulierer ausgebildet ist.

14. Verfahren zum Herstellen einer Lochplatte (8), die gemäß einem der Ansprüche 1 bis 8 ausgebildet ist,
**dadurch gekennzeichnet, dass**
der Lochplattenkorpus (10) durch additiven Materialauftrag schichtweise geformt wird.

15. Verfahren nach dem vorhergehenden Anspruch, wobei der Lochplattenkorpus (10) mittels eines 3D-Druckkopfs im 3D-Druckverfahren geformt wird.

## Claims

1. Die plate for hot die granulation of melts, comprising a die plate body (10) having melt channels (7) which pass through the die plate body (10) and feed onto an outlet surface (6) distributed in ring-shaped formation, on which outlet surface the exiting melt strands can be hot-cut by a rotating blade, wherein the die plate body (10) comprises at least one hollow chamber (12) for controlling the temperature of the die plate and/or thermally insulating the melt channels (7) at least partially within the annular melt channel pattern, **characterized in that** the die plate body (10) is configured as an integral one-piece layered structural body whose material layers are individually consolidated layer by layer.

2. Die plate according to the foregoing claim, wherein the melt channels (7) are formed in channel columns (16) which are arranged at least partially freestanding in the hollow chamber (12) and are integrally connected in a single piece, material-homogeneously, to body walls (13, 14) of the die plate body (10) which delimit the hollow chamber (12) on opposite sides, wherein the channel columns (16) are formed as a layered structural body, the material layers of which are individually consolidated layer by layer, wherein the channel columns (16) widen towards opposite end portions and/or have a widening rounding at opposite end portions which forms a harmonious transition to the respective adjacent body wall (13, 14), wherein the outer wall of the channel columns (16) is undercut in both axial directions parallel to the melt flow direction.

3. Die plate according to either of the foregoing two claims, wherein a support structure (18) is formed in the hollow chamber (12) to support the opposite body walls (13, 14) bounding the hollow chamber (12) against each other, wherein the support structure (18) forms a wave pattern running along a wave running direction from one die plate peripheral side to the opposite die plate peripheral side, wherein the support structure (18) comprises support walls (17) and/or pillars integrally connected to and/or formed integrally with the opposing body walls (13, 14) in a materially homogeneous manner, wherein the support walls (17) and/or pillars are constructed as a layered structural body and are consolidated layer by layer.

4. Die plate according to the foregoing claim, wherein more than 15 or more than 25 support walls are provided in the hollow chamber (12), wherein the support walls (17) and/or pillars are arranged along mutually parallel lines.

5. Die plate according to any of the foregoing two claims, wherein the support walls (17) and/or pillars are provided with arch-shaped or window-shaped apertures (19), wherein the apertures (19) are rounded at least towards a body wall (13, 14) bounding the hollow chamber (12), wherein the support walls (17) and/or pillars have a wall thickness/height ratio of 1:5 or smaller.

6. Die plate according to any of the foregoing claims, wherein the die plate body (10) has at least one discharge hole (23) for removing unconsolidated raw material from the hollow chamber (12), wherein the at least one discharge hole (23) opens onto the inlet-side end face of the die plate (2).

7. Die plate according to any of the foregoing claims, wherein a wear-resistant hard material ring (11), which forms a counter surface for the rotating blade, is seated on the outlet side of the die plate body (10) and the melt channels (7) open out on an outer side of the hard material ring (11).

8. Die plate according to the foregoing claim, wherein the die plate body (10) is bonded to the hard material ring (11) by material bonding and/or by microform bonding and/or by chemical bonding upon solidification of the molten material layer of the layered body adjacent to the hard material ring (11).

9. Hot die face granulation head (2) having a connection body (9) on which a die plate (8) formed according to the foregoing claims is mounted.

10. Hot die face granulation head according to the foregoing claim, wherein the die plate (8) is connected by material bonding and/or by microform bonding and/or by chemical bonding during solidification of the molten material layer of the layered structural body adjacent to the connection support (9).

11. Hot die face granulator comprising a granulation head, configured according to one of the two of the foregoing claims.

12. Hot die face granulator according to the foregoing claim, wherein the granulator is configured as an underwater or water ring granulator.

13. Hot die face granulator according to the foregoing claim, wherein the granulator is an air granulator.

14. Method for producing a die plate (8) configured according to any of claims 1 to 8, **characterized in that** the die plate body (10) is formed layer by layer by additive material application.

15. Method according to the foregoing claim, wherein the die plate body (10) is formed by means of a 3D printing head in a 3D printing process.

## Revendications

1. Plaque porte-filière pour la granulation à chaud par face de filière de matières fondues, avec un corps de plaque porte-filière (10), qui présente des canaux pour matières fondues (7), qui traversent le corps de plaque porte-filière (10) et débouchent de manière répartie en une formation annulaire sur une surface de sortie (6), sur laquelle des boyaux de matières fondues sortants peuvent être décrochés à chaud par une lame rotative, dans laquelle le corps de plaque porte-filière (10) présente au moins une chambre creuse (12) pour thermoréguler la plaque porte-filière et/ou pour isoler thermiquement les canaux pour matières fondues (7) au moins en partie dans la formation annulaire du canal pour matières fondues, **caractérisée en ce que** le corps de plaque porte-filière (10) est réalisé en tant qu'un corps stratifié additif monobloc d'un seul tenant, dont les couches de matériau sont appliquées de manière additive et sont solidifiées individuellement couche par couche.

2. Plaque porte-filière selon la revendication précédente, dans laquelle les canaux pour matières fondues (7) sont réalisés dans des colonnes de canaux (16), qui sont disposées au moins en partie librement dans la chambre creuse (12) et sont reliées de manière homogène en termes de matériaux, d'un seul tenant monobloc, à des parois de corps (13, 14) du corps de plaque porte-filière (10), qui délimitent sur des côtés opposés la chambre creuse (12), dans laquelle les colonnes de canaux (16) sont réalisées en tant que corps stratifié, dont les couches de matériaux sont solidifiées individuellement couche par couche, dans laquelle les colonnes de canaux (16) s'élargissent en direction de sections d'extrémité opposées et/ou possèdent un arrondi s'élargissant sur des sections d'extrémité opposées, qui forme une transition harmonieuse vers la paroi de corps (13, 14) respectivement adjacente, dans laquelle la paroi extérieure des colonnes de canaux (16) est réalisée de manière contre-dépouillée de manière parallèle à la direction d'écoulement de matières fondues dans deux directions axiales.

3. Plaque porte-filière selon l'une quelconque des deux revendications précédentes, dans laquelle est réalisée dans la chambre creuse (12) une structure d'appui (18), qui soutient les parois de corps (13, 14) opposées, qui délimitent la chambre creuse (12), dans laquelle la structure d'appui (18) forme une formation en ondes, qui s'étend le long d'une direction de propagation des ondes depuis un côté périphérique de plaque porte-filière vers le côté périphérique de plaque porte-filière opposé, dans laquelle la structure d'appui (18) comprend des parois et/ou des flèches d'appui (17), qui sont reliées aux parois de corps (13, 14) opposées de manière homogène en termes de matériaux, d'un seul tenant monobloc et/ou y sont formées, dans laquelle les parois et/ou les flèches d'appui (17) sont élaborées en tant que corps stratifié et sont solidifiées couche par couche.

4. Plaque porte-filière selon la revendication précédente, dans laquelle plus de 15 ou plus de 25 parois d'appui sont prévues ans la chambre creuse (12), dans laquelle les parois (17) et/ou les flèches d'appui sont disposées le long de lignes parallèles les unes par rapport aux autres.

5. Plaque porte-filière selon l'une quelconque des deux revendications précédentes, dans laquelle les parois (17) et/ou les flèches d'appui sont pourvues d'ajours (19) en forme d'arche ou de fenêtre, dans laquelle les ajours (19) sont arrondis au moins en une paroi de corps (13, 14), qui délimite la chambre creuse (12), dans laquelle les parois (17) et/ou les flèches d'appui possèdent un rapport entre épaisseur de paroi/hauteur inférieur ou égal à 1:5.

6. Plaque porte-filière selon l'une quelconque des revendications précédentes, dans laquelle le corps de plaque porte-filière (10) possède au moins une ouverture de vidange (23) pour enlever le matériau brut non solidifié hors de la chambre de creuse (12), dans laquelle l'au moins une ouverture de vidange (23) débouche sur le côté frontal côté entrée de la plaque porte-filière (2).

7. Plaque porte-filière selon l'une quelconque des revendications précédentes, dans laquelle un anneau en matériau dur (11) résistant à l'usure, qui forme une contre-surface pour la lame rotative, repose sur le côté de sortie du corps de plaque porte-filière (10) et les canaux pour matières fondues (7) débouchent sur un côté extérieur de l'anneau en matériau dur (11).

8. Plaque porte-filière selon la revendication précédente, dans laquelle le corps de plaque porte-filière (10) est relié à l'anneau en matériau dur (11) par liaison de matériau et/ou par micro-complémentarité de formes et/ou par liaison chimique lors de la solidification de la couche de matériau, fondue, jouxtant l'anneau en matériau dur (11), du corps stratifié.

9. Tête de granulation à chaud par face (2) avec un corps de raccordement (9), sur lequel une plaque porte-filière (8) réalisée selon les revendications précédentes est fixée.

10. Tête de granulation à chaud par face selon la revendication précédente, dans laquelle la plaque porte-filière (8) est reliée par liaison de matière et/ou par micro-complémentarité de formes et/ou par liaison chimique lors de la solidification de la couche de matériau fondue, jouxtant le support de raccordement (9) du corps stratifié.

11. Granulateur à chaud par face avec une tête de granulation, qui est réalisée selon l'une quelconque des deux revendications précédentes.

12. Granulateur à chaud par face selon la revendication précédente, dans lequel le granulateur est réalisé en tant qu'un granulateur sous-marin ou à anneau d'eau.

13. Granulateur à chaud par face selon la revendication précédente, dans lequel le granulateur est réalisé en tant que granulateur à air.

14. Procédé de fabrication d'une plaque porte-filière (8), qui est réalisée selon l'une quelconque des revendications 1 à 8,
**caractérisé en ce que**
le corps de plaque porte-filière (10) est formé par couche par application de matériau additive.

15. Procédé selon la revendication précédente, dans lequel le corps de plaque porte-filière (10) est formé au moyen d'une tête d'impression 3D dans le procédé d'impression 3D.
